# EUROPÄISCHE PATENTANMELDUNG

(11) **EP 0 949 790 A1**
(43) Veröffentlichungstag der Anmeldung: **13.10.1999**
(21) Anmeldenummer: 99105307.5
(22) Anmeldetag: 15.03.1999
(51) Int. Cl.: H04M 1/00, H04M 3/42

(54) **Verfahren zur Darstellung einer Bedieneroberfläche an einer Anzeigevorrichtung eines Telekommunikationsendgerätes**

(30) Priorität: 16.03.1998 DE 19811125
(71) Anmelder: ROBERT BOSCH GMBH, 70442 Stuttgart (DE)
(72) Erfinder: Buergel, Steffen, D-61440 Oberursel (DE); Giebler, Hans-Juergen, D-61130 Nidderau (DE); Rueth, Stephan, D-61130 Nidderau (DE)

(57) **Zusammenfassung**

Es wird ein Verfahren zur Darstellung einer Bedienoberfläche (1) an einer Anzeigevorrichtung (5) eines Telekommunikationsendgerätes (10, 15) vorgeschlagen. Die Verfügbarkeit mindestens einer Bedienfunktion (21, ..., 35) des Telekommunikationsendgerätes (10, 15) in einem Telekommunikationssystem (20, 60) wird bei einer dem Telekommunikationssystem (20, 60) zugeordneten Zentrale (40, 41) abgefragt. Dem Telekommunikationsendgerät (10, 15) wird von der Zentrale (40, 41) mitgeteilt, ob die mindestens eine Bedienfunktion (21, ..., 35) in dem Telekommunikationssystem (20, 60) verfügbar ist. Nur im Telekommunikationssystem (20, 60) verfügbare Bedienfunktionen (21, ..., 35) werden an der Bedienoberfläche (1) des Telekommunikationsendgeräts (10, 15) angezeigt.

## Beschreibung

### Stand der Technik

Die Erfindung geht von einem Verfahren zur Darstellung einer Bedienoberfläche an einer Anzeigevorrichtung eines Telekommunikationsendgerätes nach der Gattung des Hauptanspruchs aus.

Aus dem Bosch Telecom-Katalog "Bosch Heim- und Bürokommunikation 1996/97. In jeder Hinsicht eine gelungene Verbindung." ist bereits das Schnurlos-Telefon "DECT-Com 557" bekannt, für das eine Bedienerführung vorgesehen ist. Dabei genügen zwei Tasten, um in einer Menüliste von Funktion zu Funktion zu gelangen, wobei die Funktionen auf einem Flüssigkristall-Display des Schnurlostelefons angezeigt werden.

### Vorteile der Erfindung

Das erfindungsgemäße Verfahren mit den Merkmalen des Hauptanspruchs hat demgegenüber den Vorteil, daß die Verfügbarkeit mindestens einer Bedienfunktion des Telekommunikationsendgerätes in einem Telekommunikationssystem bei einer dem Telekommunikationssystem zugeordneten Zentrale abgefragt wird, daß dem Telekommunikationsendgerät von der Zentrale mitgeteilt wird, ob die mindestens eine Bedienfunktion in dem Telekommunikationssystem verfügbar ist und daß nur im Telekommunikationssystem verfügbare Bedienfunktionen an der Bedienoberfläche des Telekommunikationsendgerätes angezeigt werden. Auf diese Weise ist es möglich, ein Telekommunikationsendgerät in unterschiedlichen Telekommunikationssystemen mit jeweils unterschiedlichem Bedienfunktions- bzw. Leistungsmerkmalsumfang zu betreiben und dem jeweiligen Benutzer dennoch nur die Bedienfunktionen bzw. Leistungsmerkmale in einem Menü an einer Bedienoberfläche anzubieten, die in dem Telekommunikationssystem verfügbar sind, in das das Telekommunikationsendgerät gerade eingebucht ist. Bedienfunktionen, die in diesem Telekommunikationssystem nicht verfügbar oder noch nicht verfügbar sind, werden dem Benutzer an der Bedienoberfläche des Telekommunikationsendgerätes somit auch nicht angezeigt, so daß die Übersichtlichkeit über die verfügbaren Bedienfunktionen für den Benutzer erhöht und der Bedienkomfort verbessert wird.

Noch nicht verfügbare Bedienfunktionen des Telekommunikationsendgerätes können dabei zu einem späteren Zeitpunkt als Menüpunkt der Bedienoberfläche aktiviert werden, wenn sie zu diesem späteren Zeitpunkt verfügbar sind, ohne daß dabei eine Veränderung der Hardware und der Software des Telekommunikationsendgerätes erforderlich wird.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist dabei, daß die Verfügbarkeit der mindestens einen Bedienfunktion bei einer Einbuchung des Telekommunikationsendgerätes in das Telekommunikationssystem abgefragt wird. Auf diese Weise werden dem Benutzer von Anfang an nur im aktuell verwendeten Telekommunikationssystem verfügbare Bedienfunktionen an der Bedienoberfläche des Telekommunikationsendgerätes angezeigt, so daß er von Anfang an nur die verfügbaren Bedienfunktionen zur Aktivierung angeboten bekommt und daher von Anfang an eine maximale Übersichtlichkeit über die verfügbaren Bedienfunktionen für den Benutzer vorliegt.

Ein weiterer Vorteil besteht darin, daß Informationen über die Verfügbarkeit der Bedienfunktionen des Telekommunikationsendgerätes in einem nichtflüchtigen Schreib-/Lesespeicher des Telekommunikationsendgerätes mindestens für die Dauer der Nutzung des Telekommunikationssystems gespeichert werden. Auf diese Weise bleiben diese Informationen auch nach einem Stromausfall, zum Beispiel bei einem defekten Akkumulator oder einem leeren Akkumulator verfügbar, ohne daß ein erneutes Einbuchen des Telekommunikationsendgerätes in das Telekommunikationssystem für die Initialisierung des Telekommunikationsendgerätes mit den Informationen über die verfügbaren Bedienfunktionen in diesem Telekommunikationssystem erforderlich wird.

Ein weiterer Vorteil besteht darin, daß verfügbare Bedienfunktionen an der Anzeigevorrichtung ohne Lücken für die Anzeige nicht verfügbarer Bedienfunktionen dargestellt werden. Auf diese Weise wird die Übersichtlichkeit über die verfügbaren Bedienfunktionen an der Bedienoberfläche des Telekommunikationsendgerätes für den Benutzer weiter erhöht. Der vorhandene Platz an der Anzeigevorrichtung zur Darstellung der verfügbaren Bedienfunktionen wird außerdem besser ausgenutzt, wenn eine solch lückenlose Darstellung an der Anzeigevorrichtung erfolgt.

Ein weiterer Vorteil besteht darin, daß eine Abfrage in der Zentrale nach mindestens einer verfügbaren Bedienfunktion zu vorgegebenen Zeiten erfolgt, solange das Telekommunikationsendgerät in das Telekommunikationssystem eingebucht ist. Auf diese Weise wird die Anzeige verfügbarer Bedienfunktionen an der Bedienoberfläche des Telekommunikationsendgerätes zu den vorgegebenen Zeiten aktualisiert, so daß der Benutzer über Änderungen des verfügbaren Bedienfunktionsumfanges des Telekommunikationsendgerätes auf dem laufenden gehalten wird.

### Zeichnung

Ein Ausführungsbeispiel der Erfindung ist in der Zeichnung dargestellt und in der nachfolgenden Beschreibung näher erläutert.

Es zeigen Figur
1a) ein Blockschaltbild eines drahtlosen Telekommunikationssystems,
1b) ein Blockschaltbild eines drahtgebundenen Telekommunikationssystems,
2) einen Ablaufplan für die Funktionsweise des erfindungsgemäßen Verfahrens,
Figur 3 ein Blockschaltbild eines Telekommunikationsendgerätes und
Figur 4 eine Bedienoberfläche eines Telekommunikationsendgerätes.

### Beschreibung des Ausführungsbeispieles

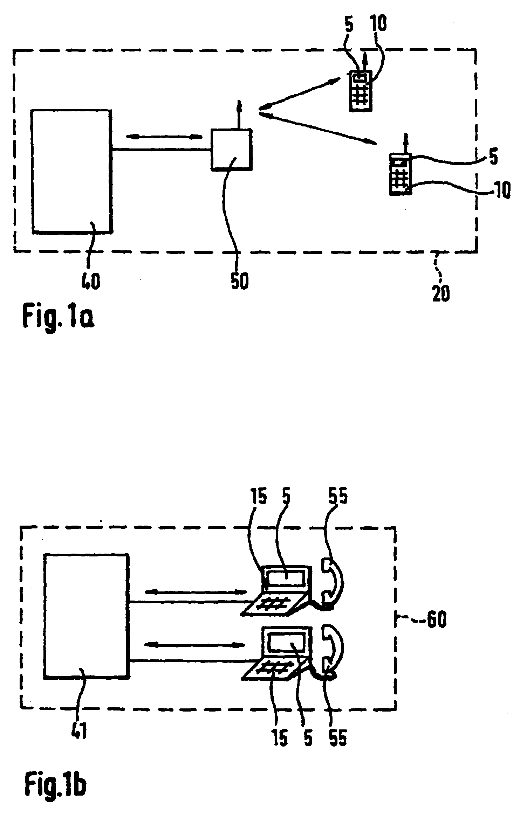

In Figur 1a) kennzeichnet 20 ein erstes Telekommunikationssystem. Das erste Telekommunikationssystem 20 umfaßt eine erste Zentrale 40 und eine mit der ersten Zentrale 40 verbundene Basisstation 50. Über die Basisstation 50 können zwei als Mobiltelefon 10 ausgebildete Telekommunikationsendgeräte drahtlos per Funk miteinander kommunizieren. Die beiden Mobiltelefone 10 umfassen dabei jeweils eine beispielsweise als Flüssigkristall-Display ausgebildete Anzeigevorrichtung 5.

Gemäß Figur 1b) ist ein zweites Telekommunikationssystem 60 dargestellt, das eine zweite Zentrale 41 umfaßt, an die zwei als Terminal 15 ausgebildete Telekommunikationsendgeräte angeschlossen sind, die jeweils mit einem Handapparat 55 verbunden sind und ebenfalls eine beispielsweise als Flüssigkristall-Display ausgebildete Anzeigevorrichtung 5 aufweisen. Zwischen den beiden Terminals 15 kann über die zweite Zentrale 41 eine drahtgebundene Verbindung aufgebaut werden.

An der Anzeigevorrichtung 5 ist eine Bedienoberfläche 1 darstellbar. Die Bedienoberfläche 1 kann dabei wie in Figur 4 dargestellt aufgebaut sein. Gemäß Figur 4 stellt die Bedienoberfläche 1 ein Bedienmenü dar, das in Menüoberpunkte 21, 22, 23, 24 und in Menüunterpunkte 25, ..., 35 aufgeteilt ist. Die Menüoberpunkte 21, 22, 23, 24 klassifizieren dabei jeweils ihnen zugeordnete Bedienfunktionen, die mittels der Menüunterpunkte 25, ..., 35 dargestellt werden. So kennzeichnet beispielsweise der erste Menüoberpunkt 21 das Leistungsmerkmal Rufumleitung. Dem ersten Menüoberpunkt 21 ist dabei ein erster Menüunterpunkt 25, ein zweiter Menüunterpunkt 26 und ein dritter Menüunterpunkt 27 zugeordnet. Der erste Menüunterpunkt 25 kennzeichnet dabei eine Bedienfunktion, wonach eine Quelladresse für eine Rufumleitung angezeigt werden kann. Der zweite Menüunterpunkt 26 kennzeichnet eine Bedienfunktion, wonach eine Zieladresse für eine Rufumleitung angezeigt werden kann. Der dritte Menüunterpunkt 27 kennzeichnet eine Bedienfunktion, wonach die Zeit angezeigt werden kann, nach der eine Rufumleitung erfolgte. Der zweite Menüoberpunkt 22 kennzeichnet das Leistungsmerkmal Anrufliste zur Anzeige eingegangener und nicht entgegegengeommener Rufe. Dem zweiten Menüoberpunkt 22 sind dabei ein vierter Menüunterpunkt 28, ein fünfter Menüunterpunkt 29 und ein sechster Menüunterpunkt 30 zugeordnet. Der vierte Menüunterpunkt 28 kennzeichnet eine Bedienfunktion, wonach ein zuerst eingegangener und nicht entgegengenommener Anruf angezeigt werden kann. Der fünfte Menüunterpunkt 29 kennzeichnet eine Bedienfunktion, wonach ein als zweites eingegangener und nicht entgegengenommener Anruf angezeigt werden kann. Der sechste Menüunterpunkt 30 kennzeichnet eine Bedienfunktion, wonach ein als drittes eingegangener und nicht entgegengenommener Anruf angezeigt werden kann. Der dritte Menüoberpunkt 23 kennzeichnet das Leistungsmerkmal Wahlwiederholung. Dem dritten Menüoberpunkt 23 sind ein siebter Menüunterpunkt 31, ein achter Menüunterpunkt 32 und ein neunter Menüunterpunkt 33 zugeordnet. Dabei kennzeichnet der siebte Menüunterpunkt 31 eine Bedienfunktion, wonach eine zuletzt gewählte Rufnummer erneut angewählt werden kann. Der achte Menüunterpunkt 32 kennzeichnet eine Bedienfunktion, wonach eine als vorletzte gewählte Rufnummer erneut angewählt werden kann. Der neunte Menüunterpunkt 33 kennzeichnet eine Bedienfunktion, wonach eine als vorvorletzte angewählte Rufnummer erneut angewählt werden kann. Der vierte Menüoberpunkt 24 kennzeichnet das Leistungsmerkmal Gebührenanzeige. Dem vierten Menüoberpunkt 24 sind ein zehnter Menüunterpunkt 34 und ein elfter Menüunterpunkt 35 zugeordnet. Der zehnte Menüunterpunkt 34 kennzeichnet dabei eine Bedienfunktion, wonach die bei einem zuletzt geführten Telefonat angefallenen Gebühren angezeigt werden können. Der elfte Menüunterpunkt 35 kennzeichnet eine Bedienfunktion, wonach eine Anzeige der seit einem vorgegebenen Zeitpunkt insgesamt angefallenen Gebühren realisiert werden kann.

Weitere, aus Platzgründen nicht an der Bedienoberfläche 1 der Anzeigevorrichtung 5 darstellbare Menüober- und/oder -unterpunkte können zum Beispiel durch Scrollen an einer Tastatur des Telekommunikationsendgerätes zur Anzeige gebracht werden. Zur Auswahl und Aktivierung einer an der Bedienoberfläche 1 dargestellten Bedienfunktion können entsprechende Auswahltasten vorgesehen sein, durch deren Betätigung Menüober- oder -unterpunkte an der Bedienoberfläche 1 markiert und aktiviert werden können.

Der Leistungsumfang des Telekommunikationsendgerätes 10, 15 sieht eine vorgegebene Menge realisierbarer Bedienfunktionen vor. Die Realisierung dieser Bedienfunktionen wird dabei durch die im Telekommunikationsendgerät 10, 15 vorhandene Hard- und Software gewährleistet. Die Telekommunikationsendgeräte 10, 15 können in verschiedenen Telekommunikationssystemen betrieben werden. In verschiedenen Telekommunikationssystemen können verschiedene Leistungsmerkmale unterstützt werden. So kann es vorkommen, daß nicht alle der vom Telekommunikationsendgerät 10, 15 realisierbaren Leistungsmerkmale bzw. Bedienfunktionen auch von dem Telekommunikationssystem unterstützt werden, in dem das entsprechende Telekommunikationsendgerät 10, 15 gerade betrieben wird. Von diesem Telekommunikationssystem nicht unterstützte Leistungsmerkmale bzw. Bedienfunktionen sind daher an einem in das Telekommunikationssystem eingebuchten Telekommunikationsendgerät auch nicht verfügbar. Sie könnten dennoch an der Bedienoberfläche 1 in Form von Menüober- und/oder -unterpunkten dargestellt werden. Um zu verhindern, daß der Benutzer an der Bedienoberfläche 1 Bedienfunktionen aufruft, die ihm in dem Telekommunikationssystem, in das er sein Telekommunikationsendgerät eingebucht hat, gar nicht zur Verfügung stehen, wird die Verfügbarkeit der vom Telekommunikationsendgerät 10, 15 unterstützbaren Bedienfunktionen bei der dem Telekommunikationssystem 20, 60 zugeordneten Zentrale 40, 41 abgefragt. Dem Telekommunikationsendgerät 10, 15 wird dann von der Zentrale 40, 41 mitgeteilt, welche dieser Bedienfunktionen in dem Telekommunikationssystem 20, 60 unterstützt werden bzw. verfügbar sind. An der Bedienoberfläche 1 werden dann nur in diesem Telekommunikationssystem 20, 60, in das das Telekommunikationsendgerät 10, 15 gerade eingebucht ist, verfügbare Bedienfunktionen an der Bedienoberfläche 1 des Telekommunikationsendgeräts 10, 15 angezeigt. Im beschriebenen Ausführungsbeispiel sind dies die Menüoberpunkte 21, ..., 24 und Menüunterpunkte 25, ..., 35, die an der Bedienoberfläche 1 gemäß Figur 4 dargestellt werden. Diese Menüoberpunkte 21, ..., 24 und Menüunterpunkte 25, ..., 35 entsprechen den am Telekommunikationsendgerät 10, 15 im Telekommunikationssystem 20, 60 verfügbaren Bedienfunktionen. Weitere verfügbare Bedienfunktionen können, falls vorhanden, aus Platzgründen zunächst nicht an der Bedienoberfläche 1 dargestellt werden, sind jedoch nach Tastenbetätigung am Telekommunikationsendgerät anzeigbar.

Die Verfügbarkeit der Bedienfunktionen 21, ..., 35 kann beispielsweise bei der Einbuchung des Telekommunikationsendgerätes 10, 15 in das Telekommunikationssystem 20, 60 abgefragt werden, so daß bei jedem Einbuchungsvorgang eine Aktualisierung der verfügbaren und an der Bedienoberfläche 1 darstellbaren Bedienfunktionen 21, ..., 35 erfolgt. Es kann weiterhin vorgesehen sein, eine Abfrage in der Zentrale 40, 41 nach verfügbaren Bedienfunktionen zu vorgegebenen Zeiten durchzuführen, während das Telekommunikationsendgerät 10, 15 in das Telekommunikationssystem 20, 60 eingebucht ist, um auf diese Weise Änderungen in der Verfügbarkeit von Bedienfunktionen 21, ..., 35 nachvollziehen und die Darstellung verfügbarer Bedienfunktionen 21, ..., 35 an der Bedienoberfläche 1 gegebenenfalls aktualisieren zu können, ohne das Telekommunikationsendgerät 10, 15 erneut in das Telekommunikationssystem 20, 60 einbuchen zu müssen.

Verfügbare Bedienfunktionen 21, ..., 35 werden an der Bedienoberfläche 1 der Anzeigevorrichtung 5 ohne Lücken für die Anzeige nicht verfügbarer Bedienfunktionen dargestellt. Wenn also beispielsweise bei der Abfrage nach den gerade im Telekommunikationssystem 20, 60 verfügbaren Bedienfunktionen festgestellt wird, daß die dem zweiten Menüunterpunkt 26 entsprechende Bedienfunktion nicht mehr im Telekommunikationssystem 20, 60 verfügbar ist, so wird der dritte Menüunterpunkt 27 an dem Ort der Bedienoberfläche 1 dargestellt, an dem zuvor der zweite Menüunterpunkt 26 dargestellt wurde. An dem Ort, an dem zuvor der dritte Menüunterpunkt 27 dargestellt wurde, kann nun ein weiterer, bislang an der Bedienoberfläche 1 aus Platzgründen nicht sichtbarer Menüunterpunkt dargestellt werden.

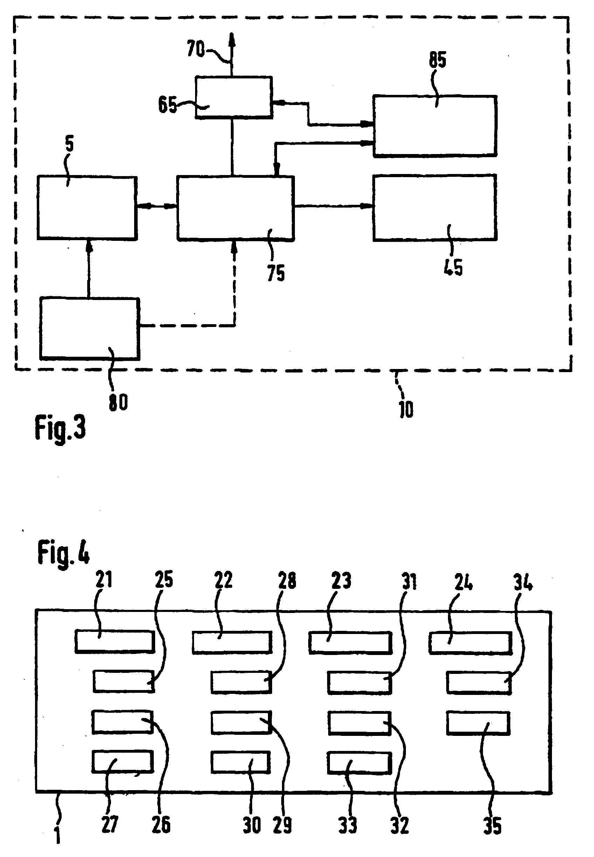

In Figur 3 ist ein Blockschaltbild des Mobiltelefons 10 dargestellt. Das Mobiltelefon 10 umfaßt eine Steuerung 75, an die die Anzeigevorrichtung 5, ein Hochfrequenz-Funkteil 65 mit einer Antenne 70, ein Hör-/Sprechteil 85, und ein nichtflüchtiger Schreib-/Lesespeicher 45 angeschlossen ist. Der nichtflüchtige Schreib-/Lersespeicher 45 kann zum Beispiel als Flash-PROM ausgebildet sein. Eine Tastatur 80 ist an die Anzeigevorrichtung 5 angeschlossen und kann zusätzlich oder alternativ auch an die Steuerung 75 angeschlossen sein. Der Hör-/Sprechteil 85 ist außerdem an das Hochfrequenz-Funkteil 65 angeschlossen.

Dabei kann beispielsweise auch das Termial 15 in entsprechender Weisse einen nichtflüchtigen Schreib-/Lesespeicher aufweisen.

Die von der Zentrale 40, 41 abgefragten Informationen über die Verfügbarkeit der Bedienfunktionen 21, ..., 35 des Telekommunikationsendgerätes 10, 15 werden in dem nichtflüchtigen Schreib-/Lesespeicher 45 mindestens für die Dauer der Nutzung des Telekommunikationssystems 20, 60 gespeichert, in das das Telekommunikationsendgerät 10, 15 gerade eingebucht ist. Somit ist es nicht erforderlich, zum Beispiel nach einem Stromausfall, eine erneute Abfrage der verfügbaren Bedienfunktionen 21, ..., 35 in der Zentrale 40, 41 zu veranlassen.

Informationen, die zur graphischen Darstellung der Bedienfunktionen 21, ..., 35 an der Bedienoberfläche 1 des Telekommunikationsendgerätes 10, 15 erforderlich sind, insbesondere die anzuzeigenden Texte und/oder graphischen Symbole können entweder in der Zentrale 40, 41 gespeichert sein oder im Telekommunikationsendgerät 10, 15 selbst, beispielsweise im nichtflüchtigen Schreib-/Lesespeicher 45. Die Informationen zur Darstellung der Bedienfunktionen 21, ..., 35 werden dann zur Anzeige an der Bedienoberfläche 1 in Abhängigkeit der an der Zentrale 40, 41 abgefragten Informationen über die Verfügbarkeit der Bedienfunktionen 21, ..., 35 von der Zentrale 40, 41 an das Telekommunikationsendgerät 10, 15 übertragen bzw. vom nichtflüchtigen Schreib-/Lesespeicher 45 des Telekommunikationsendgerätes 10, 15 abgerufen, so daß nur im gerade genutzten Telekommunikationssystem 20, 60 verfügbare Bedienfunktionen 21, ..., 35 an der Bedienoberfläche 1 des Telekommunikationsendgerätes 10, 15 angezeigt werden.

Sind die Informationen zur Darstellung der Bedienfunktionen 21, ..., 35 an der Bedienoberfläche 1 in der Zentrale 40, 41 abgespeichert, so wird Speicherplatz im jeweiligen Telekommunikationsendgerät 10, 15 eingespart. Weiterer Speicherplatz und Verarbeitungsaufwand im Telekommunikationsendgerät 10, 15 kann dadurch eingespart werden, daß die Darstellung verfügbarer Bedienfunktionen 21, ..., 35 an der Anzeigevorrichtung 5 des Telekommunikationsendgerätes 10, 15 durch die Zentrale 40, 41 veranlaßt wird. Ansonsten kann die Darstellung verfügbarer Bedienfunktionen 21, ..., 35 an der Bedienoberfläche 1 der Anzeigevorrichtung 5 durch die Steuerung 75 des Telekommunikationsendgerätes 10, 15 veranlaßt werden, wobei in diesem Fall angenommen wird, daß auch das Terminal 15 analog zum Mobiltelefon 10 eine entsprechende Steuerung aufweist.

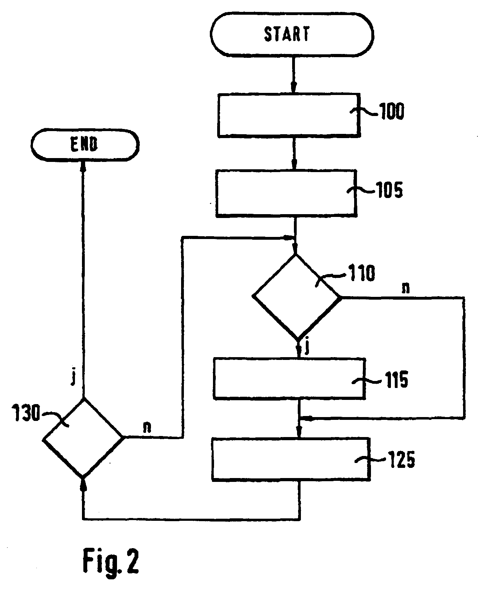

In Figur 2 ist ein Ablaufplan für den Ablauf des erfindungsgemäßen Verfahrens dargestellt, der von der ersten Zentrale 40 und der Steuerung 75 des Mobiltelefons 10 abgearbeitet wird. In analoger Weise kann der Ablaufplan gemäß Figur 2 von der zweiten Zentrale 41 und der Steuerung des Terminals 15 abgearbeitet werden, wobei ein Datenaustausch zwischen dem Terminal 15 und der zweiten Zentrale 41 drahtgebunden und ein Datenaustausch zwischen dem Mobiltelefon 10 und der ersten Zentrale 40 über die an die erste Zentrale 40 angeschlossene Basisstation 50 drahtlos erfolgt.

Bei einem Programmpunkt 100 veranlaßt die Steuerung 75 des Mobiltelefons 10 das Hochfrequenz-Funkteil 65 zur Abstrahlung von Signalisierungsdaten an die Basisstation 50 der ersten Zentrale 40. Die Basisstation 50 leitet diese Daten drahtgebunden an die erste Zentrale 40 weiter. Mittels der Signalisierungsdaten meldet sich das Mobiltelefon 10 im ersten Telekommunikationssystem 20 an. Anschließend wird zu einem Programmpunkt 105 verzweigt. Bei Programmpunkt 105 veranlaßt die Steuerung 75 des Mobiltelefons 10 das Hochfrequenz-Funkteil 65 zur Aussendung von Informationsdaten über die Basisstation 50 an die erste Zentrale 40. Die Informationsdaten enthalten dabei die Bedienfunktionen 21, ..., 35, die am Mobiltelefon 10 realisiert werden können. Die Anzahl dieser Bedienfunktionen 21, ..., 35 wird in der ersten Zentrale 40 als Maximalwert gespeichert. Anschließend wird in der ersten Zentrale 40 eine Zählvariable mit dem Wert 1 initialisiert. Anschließend wird zu einem Programmpunkt 110 verzweigt. Bei Programmpunkt 110 prüft die erste Zentrale 40, ob die erste Bedienfunktion der vom Mobiltelefon 10 übermittelten und am Mobiltelefon 10 realisierbaren Bedienfunktionen 21, ..., 35 vom ersten Telekommunikationssystem 20 unterstützt wird, d.h. im ersten Telekommunikationssystem 20 verfügbar ist. Ist dies der Fall, so wird zu einem Programmpunkt 115 verzweigt, andernfalls wird zu einem Programmpunkt 125 verzweigt. Bei Programmpunkt 115 teilt die erste Zentrale 40 der Steuerung 75 des Mobiltelefons 10 mit, daß die entsprechende Bedienfunktion verfügbar ist im ersten Telekommunikationssystem 20. Daraufhin veranlaßt die Steuerung 75 des Mobiltelefons 10 die Anzeigevorrichtung 5 zur Darstellung dieser Bedienfunktion an der Bedienoberfläche 1. Diese Bedienfunktion kann mittels der Tastatur 80 zur Aktivierung ausgewählt werden. Außerdem veranlaßt die Steuerung 75 des Mobiltelefons 10 bei Programmpunkt 115 den nichtflüchtigen Schreib-/Lesespeicher 45, eine Information über die Verfügbarkeit dieser Bedienfunktion zu speichern. Anschließend wird zu einem Programmpunkt 125 verzweigt. Bei Programmpunkt 125 wird die Zählvariable in der ersten Zentrale 40 inkrementiert. Anschließend wird zu einem Programmpunkt 130 verzweigt. Bei Programmpunkt 130 wird geprüft, ob die Zählvariable größer ist als der Maximalwert. Ist dies der Fall, so wird der Programmteil verlassen, andernfalls wird zu Programmpunkt 110 zurückverzweigt und die Verfügbarkeit der nächsten Bedienfunktion im ersten Telekommunikationssystem 20 wird von der ersten Zentrale 40 geprüft.

Den am Telekommunikationsendgerät 10, 15 realisierbaren Bedienfunktionen 21, ..., 35 können unabhängig vom jeweiligen Telekommunikationssystem Funktionscodes fest zugeordnet werden, über die die Bedienfunktionen 21, ..., 35 im jeweiligen Telekommunikationssystem identifizierbar und ihre Verfügbarkeit dadurch feststellbar ist. Die Festlegung dieser Funktionscodes sollte dabei auch alle die Bedienfunktionen 21,..., 35 berücksichtigen, die am Telekommunikationsendgerät 10, 15 realisierbar sind, auch wenn sie zunächst noch nicht in jedem Telekommunikationssystem verfügbar sind. Sind zu einem späteren Zeitpunkt, zum Beispiel aufgrund einer Softwareänderung im Telekommunikationssystem 20, 60, im Telekommunikationssystem 20, 60 weitere Bedienfunktionen 21, ..., 35 verfügbar und in der Zentrale 40, 41 des Telekommunikationssystems 20, 60 als verfügbar bekannt, so können diese Bedienfunktionen frühestens zu diesem späteren Zeitpunkt an der Bedienoberfläche 1 der Anzeigevorrichtung 5 des Telekommunikationsendgerätes 10, 15 angezeigt werden, vorausgesetzt, ihre Verfügbarkeit wurde bei einer Abfrage durch das Telekommunikationsendgerät 10, 15 in der Zentrale 40, 41 festgestellt.

## Patentansprüche

1. Verfahren zur Darstellung einer Bedienoberfläche (1) an einer Anzeigevorrichtung (5) eines Telekommunikationsendgerätes (10, 15), dadurch gekennzeichnet, daß die Verfügbarkeit mindestens einer Bedienfunktion (21,...,35) des Telekommunikationsendgerätes (10, 15) in einem Telekommunikationssystem (20, 60) bei einer dem Telekommunikationssystem (20, 60) zugeordneten Zentrale (40, 41) abgefragt wird, daß dem Telekommunikationsendgerät (10, 15) von der Zentrale (40, 41) mitgeteilt wird, ob die mindestens eine Bedienfunktion (21,...,35) in dem Telekommunikationssystem (20, 60) verfügbar ist, und daß nur im Telekommunikationssystem (20, 60) verfügbare Bedienfunktionen (21,...,35) an der Bedienoberfläche (1) des Telekommunikationsendgerätes (10, 15) angezeigt werden.

2. Verfahren nach Anspruch 1, dadurch gekennzeichnet, daß die Verfügbarkeit der mindestens einen Bedienfunktion (21,...,35) bei einer Einbuchung des Telekommunikationsendgerätes (10, 15) in das Telekommunikationssystem (20, 60) abgefragt wird.

3. Verfahren nach Anspruch 1 oder 2, dadurch gekennzeichnet, daß Informationen über die Verfügbarkeit der Bedienfunktionen (21,...,35) des Telekommunikationsendgerätes (10, 15) in einem nichtflüchtigen Schreib-/Lesespeicher (45) des Telekommunikationsendgerätes (10, 15) mindestens für die Dauer der Nutzung des Telekommunikationssystems (20, 60) gespeichert werden.

4. Verfahren nach Anspruch 1, 2 oder 3, dadurch gekennzeichnet, daß verfügbare Bedienfunktionen (21,...,35) an der Anzeigevorrichtung (5) ohne Lücken für die Anzeige nicht verfügbarer Bedienfunktionen (21,...,35) dargestellt werden.

5. Verfahren nach einem der vorherigen Ansprüche, dadurch gekennzeichnet, daß eine Abfrage in der Zentrale (40, 41) nach mindestens einer verfügbaren Bedienfunktion (21,...,35) zu vorgegebenen Zeiten erfolgt, solange das Telekommunikationsendgerät (10, 15) in das Telekommunikationssystem (20, 60) eingebucht ist.

6. Verfahren nach einem der vorherigen Ansprüche, dadurch gekennzeichnet, daß Informationen zur Darstellung der Bedienfunktionen (21,...,35) in der Zentrale (40, 41) abgespeichert werden und an das Telekommunikationsendgerät (10, 15) in Abhängigkeit der Informationen über die Verfügbarkeit der Bedienfunktionen (21,...,35) übertragen werden, so daß nur im Telekommunikationssystem (20, 60) verfügbare Bedienfunktionen (21,...,35) an der Bedienoberfläche (1) des Telekommunikationsendgerätes (10, 15) angezeigt werden.

7. Verfahren nach einem der vorherigen Ansprüche, dadurch gekennzeichnet, daß Informationen zur Darstellung der Bedienfunktionen (21,...,35) in dem Telekommunikationsendgerät (10, 15) abgespeichert werden und in Abhängigkeit der Informationen über die Verfügbarkeit der Bedienfunktionen (21,...,35) abgerufen werden, so daß nur im Telekommunikationssystem (20, 60) verfügbare Bedienfunktionen (21,...,35) an der Bedienoberfläche (1) des Telekommunikationsendgerätes (10, 15) angezeigt werden.

8. Verfahren nach einem der vorherigen Ansprüche, dadurch gekennzeichnet, daß die Darstellung verfügbarer Bedienfunktionen (21,...,35) an der Anzeigevorrichtung (5) durch das Telekommunikationsendgerät (10, 15) veranlaßt wird.

9. Verfahren nach einem der vorherigen Ansprüche, dadurch gekennzeichnet, daß die Darstellung verfügbarer Bedienfunktionen (21,...,35) an der Anzeigevorrichtung (5) durch die Zentrale (40, 41) veranlaßt wird.
